# EUROPEAN PATENT SPECIFICATION

(11) **EP 0 744 139 B1**
(45) Date of publication and mention of the grant of the patent: **01.10.2003**
(21) Application number: 96303731.2
(22) Date of filing: 24.05.1996
(51) Int. Cl.: A46B 13/02, A61C 17/26, A61H 15/00, A47J 43/08

(54) **Household appliance**
Haushaltsgerät
Appareil domestique

(30) Priority: 26.05.1995 US 452100
(43) Date of publication of application: 27.11.1996
(73) Proprietor: CLIFFIELD INDUSTRIES LTD., Fo Tan, Shatin, New Territories (HK)
(72) Inventor: Tsang, Koon Keung, Flat X, 9th Floor, Fo Tan, Shatin, New Territories (HK)
(74) Representative: Leale, Robin George

(56) References cited:
- CH-A- 566 130
- CH-A- 571 856
- DE-A- 3 029 164
- DE-C- 318 309
- FR-A- 781 179
- FR-A- 1 104 830
- US-A- 2 267 916
- US-A- 2 552 023
- US-A- 4 158 246
- US-A- 5 054 149

## Description

This invention relates to a household appliance having rotating or reciprocating heads, such as a rotating or reciprocating cleaning brush, electric toothbrush, massager, or polisher.

The household appliances with which the present invention is concerned normally consist of a head or tool attached directly to a shaft so as to rotate or oscillate therewith, in order to provide some sort of cleaning, brushing, polishing, or massaging effect.

While it would appear to be difficult to improve upon the brushing, cleaning, polishing, or massaging effect of these conventional household appliances, we have discovered several disadvantages thereof. The disadvantages are 1.) that any rotating device which is pressed against a surface to carry out its function will generate a counter-torque which increases with the power of the device, making the device difficult to handle, 2.) when the surface is uneven, for example at a corner, the device will move erratically due to the lack of symmetry in the motion of the device, 3.) in the case of a cleaning device, debris loosened by the cleaning device will tend to be pressed into the surface rather than removed, and 4.) in the case of a brush having relatively long bristles arranged to extend into holes or crevices, for example if the bristles are longer than the circumference diameter of the outer ring of bristles, the bristles will tend to twist in one direction reducing the contact area of the bristles against surfaces of the hole or crevice.

The present invention is intended to increase the efficiency of such devices, by splitting the head or tool by which the function of the device is carried out into multiple heads or tools having a differential motion. This has the advantages of 1.) offsetting or canceling out the counter-torque effect, thereby making the device easier to handle, 2.) in general balancing the forces applied by the device so as to permit the device to be applied to uneven surfaces, edges, and corners, 3.) providing a cross-cleaning effect at the point where the different sections of the device move in different directions or at different speeds, and reducing bristle twisting effect in the case of a brush.

It is known, of course, to provide small appliances such as electric toothbrushes with multiple heads or tools mounted on parallel shafts to rotate in opposite directions. While such appliances are in widespread usage, however, the use of completely separate heads or tools mounted on separate shafts does not optimize the cleaning to any significant degree, but rather simply increases the coverage of the device in order to reduce cleaning time. In contrast, the present invention seeks to split a single tool or head into multiple heads or tools with differential movement, not to increase the area covered during one pass of the device, but to provide a variety of performance improvements, including increasing the intensity of the effect provided by the multiple heads in comparison with a conventional rotating or reciprocating device of like area.

While counter-rotating head devices have been proposed for certain specialized applications, such as the spotting brush of U.S. Patent No. 1,796,641, the counter-rotation taught by this prior art is not such as is necessary to obtain a cross-cleaning effect or to provide a balancing counter-torque (on the contrary, the torque resulting from the spotting action in the 641 patent appears to be de minimus). In addition, although it is known to provide a toothbrush with oscillating counter-rotation as described in U.S. Patent No. 5,416,942, this prior art fails to recognize the advantages of cross-cleaning by oneway counter-rotation of each head, much less the generalized principles of counter-rotation or side-by-side oscillation disclosed in the present specification which would have made the applicability of one way counter rotation of a head to other types of devices evident to the ordinary artisan.

The splitting of a single head or tool into concentric or parallel multiple heads or tools arranged for coaxial rotation or side-by-side oscillation not only solves the above-mentioned problems of conventional devices, but also does so without significantly increasing the complexity of the device, since a single drive shaft can be used (although the use of a single drive shaft is not necessary to the invention in its broadest form, since the advantages of easier handling and improved cleaning do not depend on the specific mechanical arrangement used to achieve the differential rotation effect).

The advantage of eliminating counter-torque increases with the power of the device. If one presses a small conventional rotating brush against a surface, there will be a small torque in the direction opposite the direction of rotation, which is countered by the force of the person holding the brush, and which may not even be felt by that person. As power increases, however, a point is eventually reached where it will become impossible to hold the brush. By bifurcating the brush motion into two oppositely rotating sections, the problem of counter-torque will clearly be minimized even for very high power devices which could not ordinarily be handled by the average user. The balancing problem is especially apparent in devices intended to be used on uneven surfaces, such as a car polisher, and also in devices such as floor buffers which have an odd number of heads, and therefore an inherently unbalanced torque.

The cross-cleaning advantage applies even in the case of ordinary linearly reciprocating electric toothbrushes, which one would expect to remove dirt effectively despite the lack of differential motion due to the reversal of motion at the ends of the oscillations. The problem is that either the amplitude of the oscillations is so small that the cleaning tip of the soft bristles will remain relatively stationary even as the brush head moves, or the amplitude will be sufficiently large that the brush head will have moved to another surface before it reverses direction, greatly reducing the cross-cleaning effect provided by the reversal of motion at the end of the oscillations.

In the intended context of small household appliances, and in particular the cleaning and personal grooming devices described below, those skilled in the art will recognize that the specific mechanical arrangements utilized to achieve the desired differential motion may be in the form of gearing or transmission arrangements which are per se known. The use of bevel gears and planetary or ring/idler gear combinations is of course known and thus the invention in general is not intended to be limited to any such arrangements, although some of the mechanical expedients used to implement the present invention are believed to be especially advantageous in terms of efficiency, reliability, and cost, and thus form a proper basis for one or more claims.

DE-C-318309 discloses a household appliance of the type including a rotary head, wherein the head is divided into a plurality of coaxially rotatable members, at least two of said members being mutually differentially driven.

The present invention is characterised over DE-A-318309 in that the appliance comprises at least two of said heads having laterally spaced axes, the said heads being driven in series and wherein each said head has two of said coaxially rotatable members concentrically arranged to rotate in opposite directions, the inner one of said two concentrically arranged members being affixed to a first ring gear, the outer one of said two members being affixed to a second ring gear, and the two ring gears being driven by at least one pinion in engagement with both ring gears.

Thus in one preferred aspect a household appliance is provided having concentric multiple heads or tools driven to rotate in different directions, and to achieve such motions with especially efficient mechanical constructions, including modular constructions which provide for easy servicing or replacement of the counter-rotating head assemblies.

The household appliance provided has concentric multiple heads or tools driven to rotate in different directions, thereby providing a countertorque so as minimize the effort needed to utilize the device, improve balance, and, in the case of a cleaning head or brush, assist in the removal of loosened debris and reduce the twisting effect on relatively long bristles.

A preferred embodiment of the invention will now be described by way of example only and with reference to the accompanying drawings, in which:-
Figure 1 is a schematic diagram illustrating the principles of a household appliance having a tool Or head made up of coaxial differentially rotatable assemblies according to a first embodiment which does not fall within the scope of the invention.
Figure 2 is a cross-sectional side view of a cleaning brush design constructed in accordance with the principles of the first embodiment.
Figure 2-1 is a cross-sectional side view of a variation of the brush design illustrated in Figure 2 which does not fall within the scope of the invention.
Figure 2-2 is a side view of a modular version of the brush design illustrated in Figure 2.
Figure 3 is an end view of the cleaning brush design of Figures 2 and 2-1.
Figure 4 is a cross-sectional side view of a counter-rotating toothbrush head design constructed in accordance with the principles of the first embodiment which does not fall within the scope of the invention.
Figures 5 and 5-1 are perspective views of variations of the counter-rotating toothbrush head design illustrated in Figure 4 which do not fall within the scope of the invention.
Figure 5-3 is a top view of the toothbrush design illustrated in Figure 5-1.

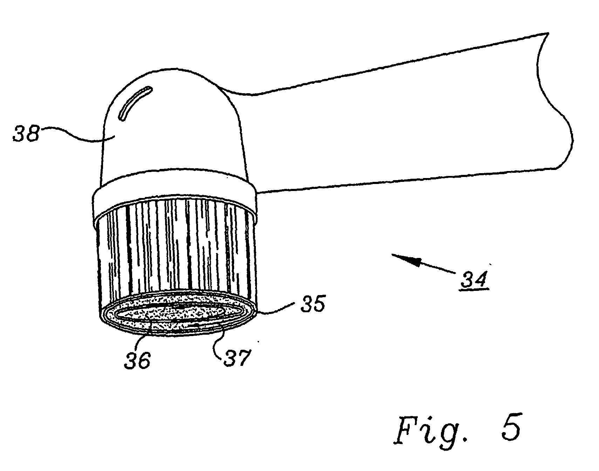

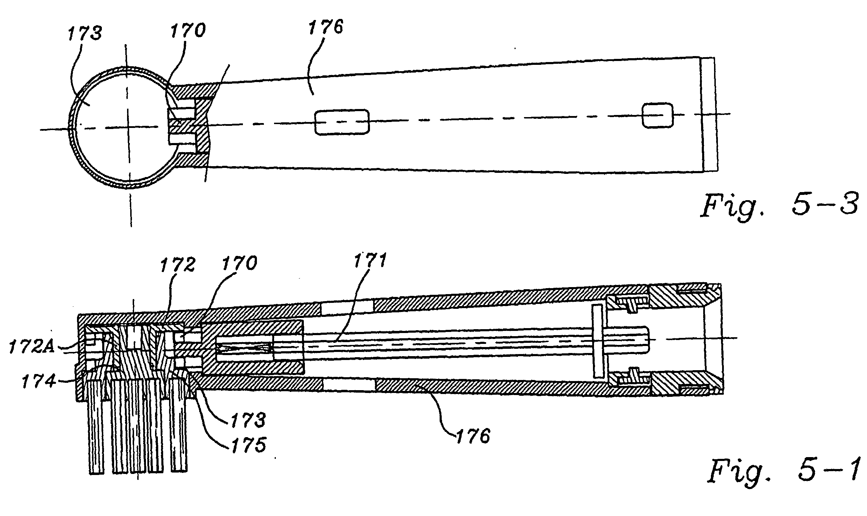

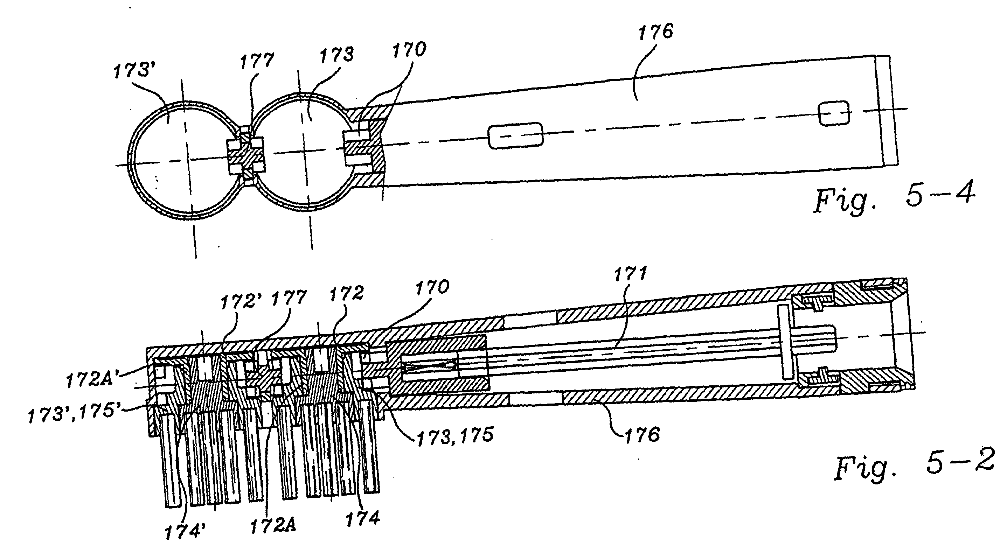

Figure 5-2 is a perspective view of a counter-rotating toothbrush head design according to the invention.
Figure 5-4 is a top view of the toothbrush design illustrated in Figure 5-2.

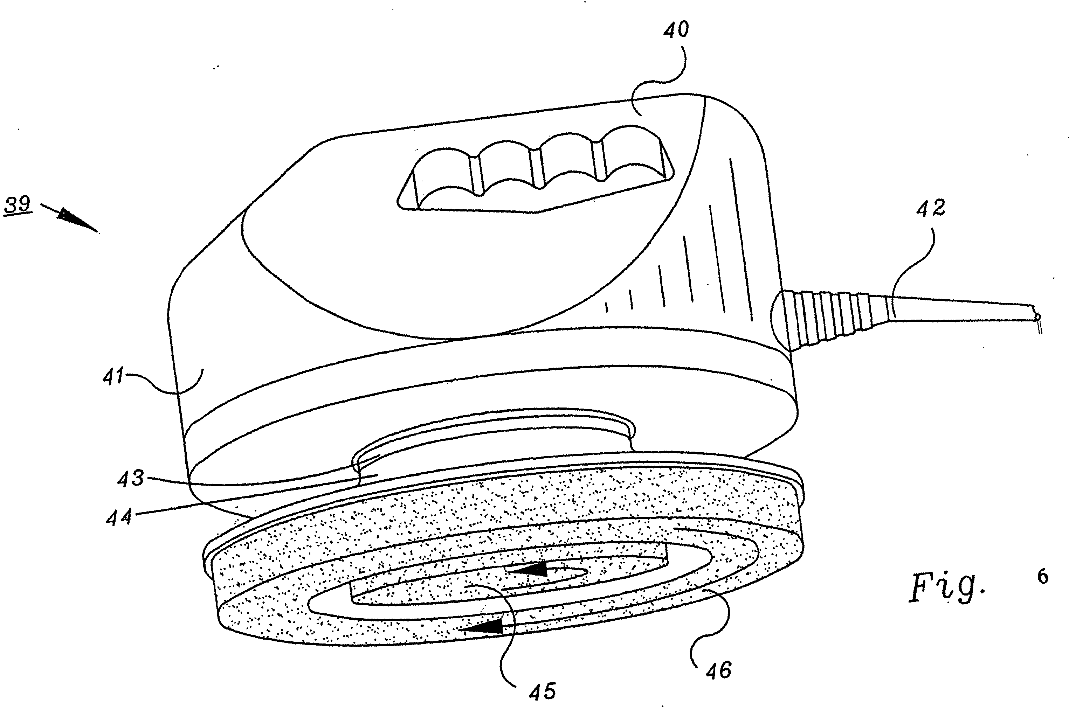

Figure 6 is a perspective view of a counter-rotating car polisher design constructed in accordance with the principles of the first embodiment which does not fall within the scope of the invention.

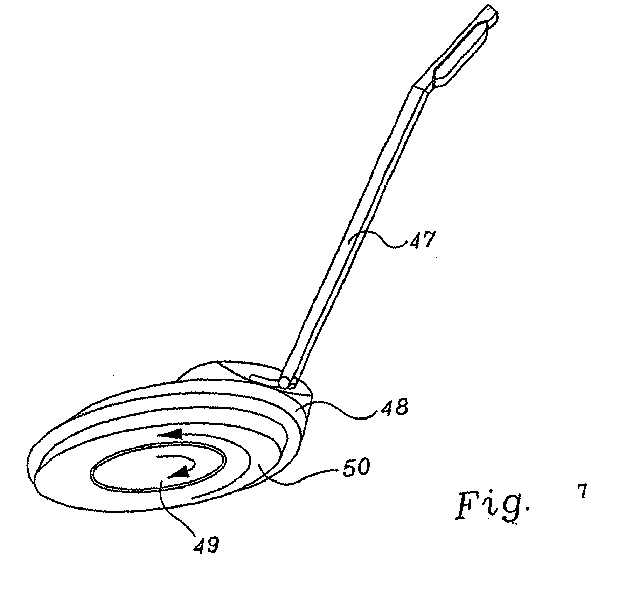

Figure 7 is a perspective view of a counter-rotating floor polisher design constructed in accordance with the principles of the first embodiment which does not fall within the scope of the invention.

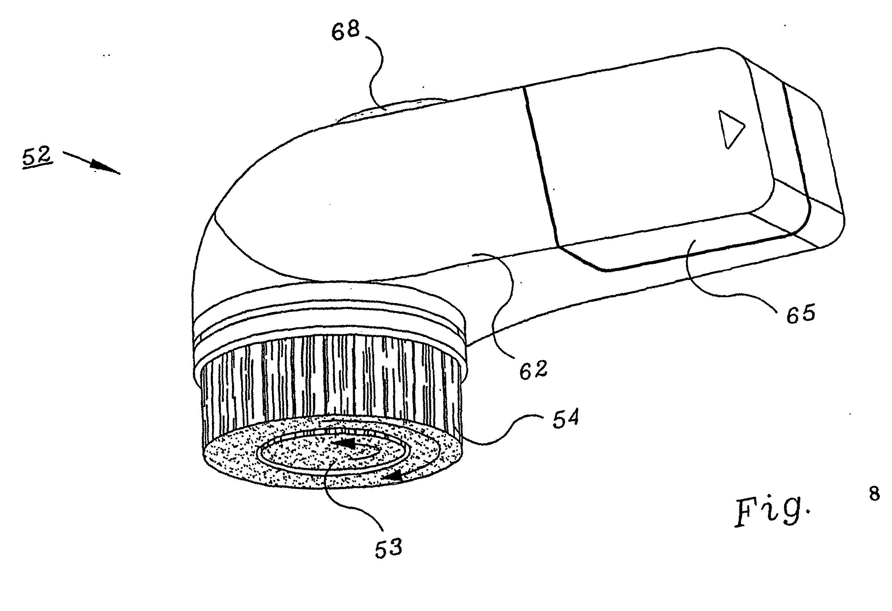

Figure 8 is a perspective view of a counter-rotating shoe polisher design constructed in accordance with the principles of the first embodiment which does not fall within the scope of the invention.

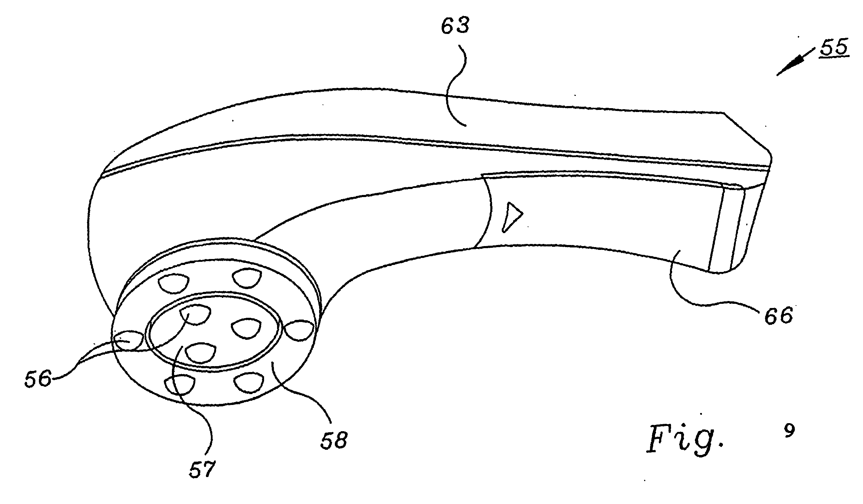

Figure 9 is a perspective view of a counter-rotating handheld massager design constructed in accordance with the principles of the first embodiment which does not fall withtin the scope of the invention.

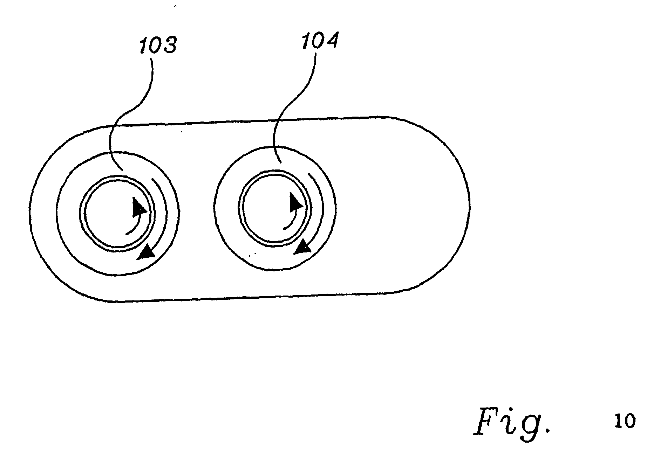

Figure 10 is a plan view showing a variation of the preferred counter-rotating device having multiple counter rotation heads.

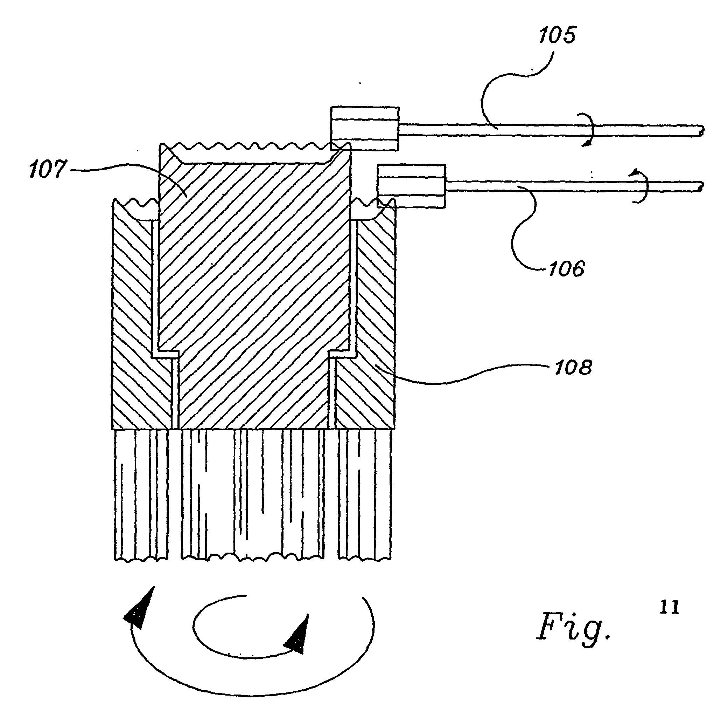

Figure 11 is a cross-sectional view of a counter-rotating device having multiple drive shafts.

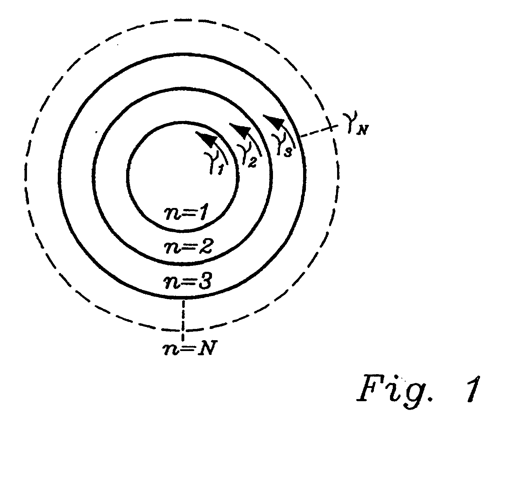

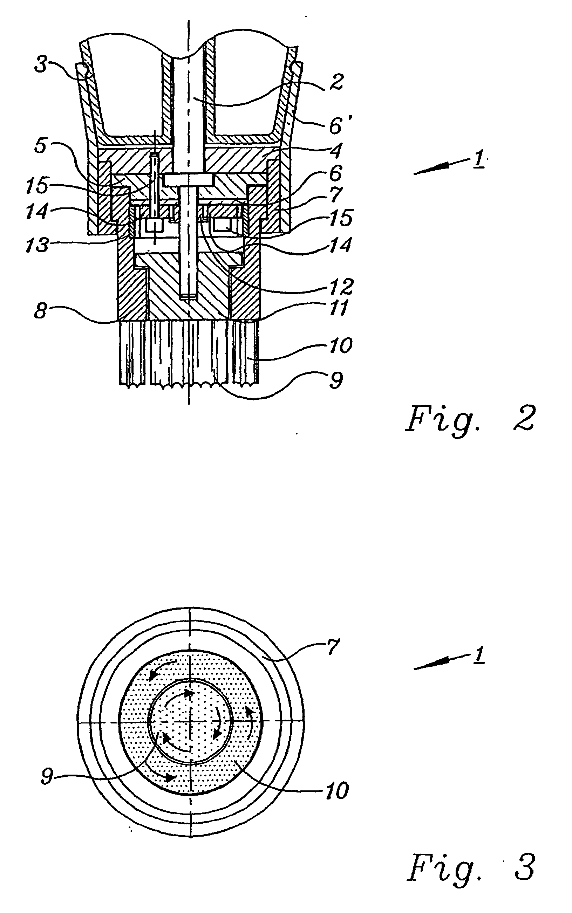

As illustrated in Figure 1, the first embodiment which does not fall within the scope of the invention provides an appliance having a rotating head or tool made up of concentric rotating discs and annular members each capable of rotating at a speed Vₙ where n=1,2,3,4,...,N. The speed Vₙ can be positive, negative (i.e., the reverse direction of positive), or zero (i.e., stationary). In most of the illustrated applications of this embodiment, except for the embodiment shown in Figure 5, n=2, V₁=+ve, and V₂=-ve, but it will be appreciated by those skilled in the art that n, V₁, and V₂ may be freely varied depending on the application, meaning that the appliance may have a head or tool split into three or more assemblies or sections which all rotate coaxially but at different speeds and in different directions. In addition, the directions of any individual assembly may be reversed periodically by an electrical or mechanical switching arrangement so that rather than rotating continuously, the individual assemblies may rotate back and forth.

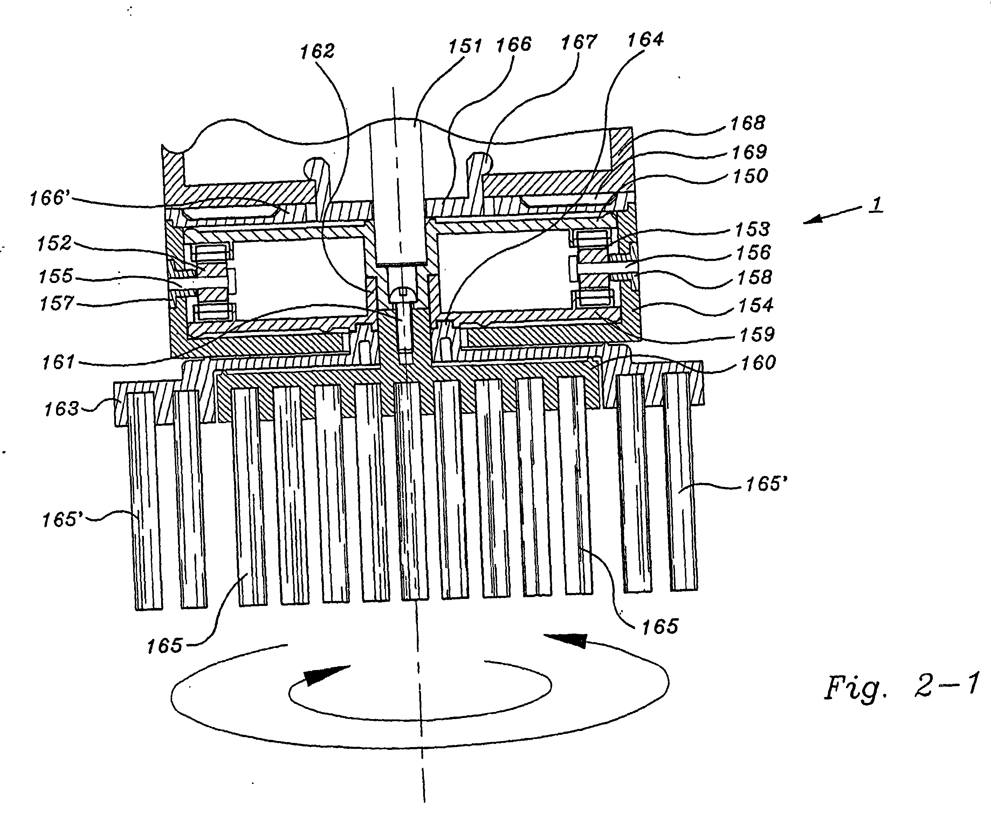

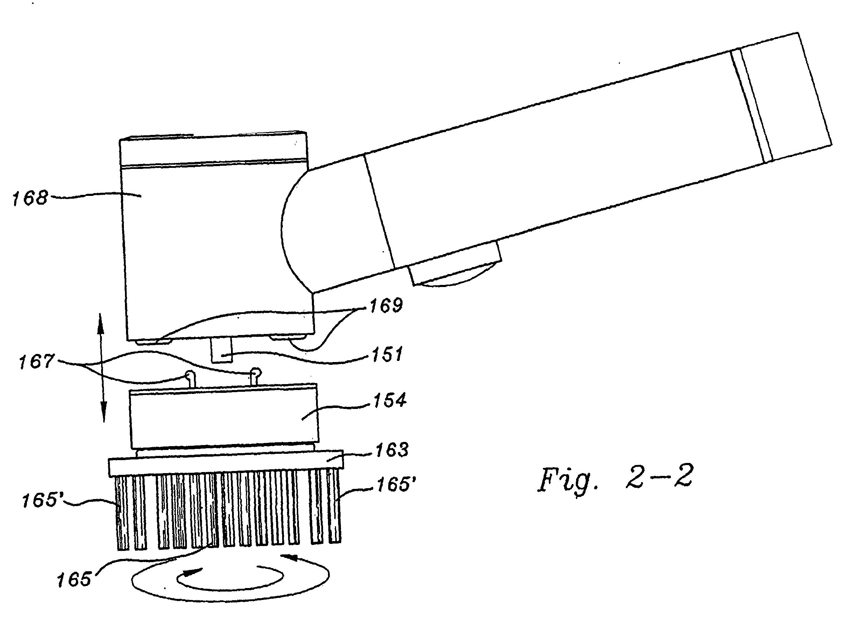

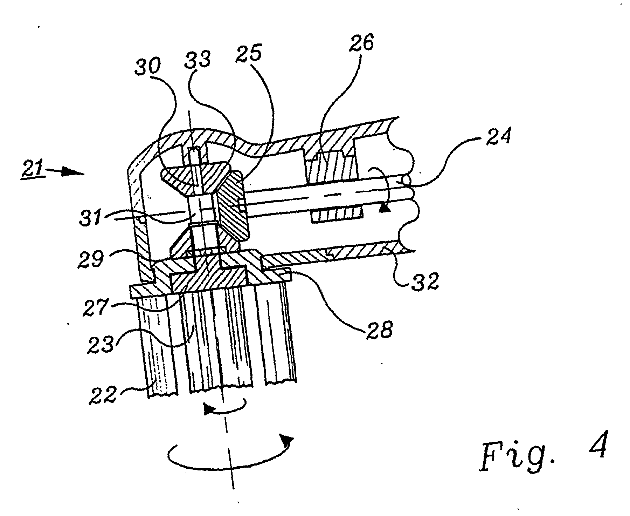

Figures 2, 2-1, and 3 show a first example of the above principles which does not fall within the scope of the invention, in which the household appliance having a rotating head is a cleaning brush 1. In these examples, the power input is provided by a rotating shaft 2 or equivalent rotating shaft 151 driven by a motor (not shown). Those skilled in the art will appreciate that any motor can be used, and that details of the motor form no part of the invention.

Turning specifically to the variation shown in Figure 2, shaft 2 is supported by appropriate bearings in a housing 3, to which is affixed bearing members 4-7, bearing member 4 being preferably affixed to housing 3 by an additional sleeve 6. Both shaft 2 and an outer bristle supporting member 8 are rotatable relative to bearing members 4-7.

The brush assembly of the counter-rotatable cleaning brush of this variation of the first embodiment which does not fall within the scope of the invention includes an inner circular bristle assembly 9 and an outer annular bristle assembly 10 arranged to rotate in opposite directions and supported, respectively, by cylindrical support member 11 and the above-mentioned support member 8. Support member 11 is preferably directly affixed to and rotated by shaft 2, while the counter-rotation effect for support member 8 and the second bristle assembly 10 is provided by a planetary gear system made up of a drive gear 12 affixed to the motor shaft 2, a ring gear 13 affixed to support member 8, and at least one idler gear 14 rotatable about a pin 15 secured to the bearing members 4-6 so as to prevent the idler gears 14 from revolving around the drive gear 13.

As a result of this structure, a brush is provided in which the outside bristles rotate in a direction opposite that of the inside bristles, thus providing an improved brushing effect without the need for a second motor or additional main shaft, or for significant modifications of the existing motor, drive shaft, and housing structure (although the improved brushing effect could also be achieved even if a second motor and/or shaft are provided). The only additions to the conventional structure which are required are a ring gear, idler gears, a drive gear on the shaft, and an additional support member for the outer bristle assembly.

In an especially efficient variation of the structure shown in Figure 2, as illustrated in Figure 2-1, the single ring and idler gear mechanism is replaced by a double ring gear mechanism made up of a first ring gear 150 driven by and secured to motor-driven shaft 151 to rotate therewith, at least one pinion 152, 153 rotatably connected to reversing brush module housing 154 by a pin 155,156 and bushing 157,158 and in engagement with first ring gear 150 to rotate in response to rotation of the first ring gear, and a second ring gear 159 rotatable relative to shaft 151 in a direction opposite the direction of rotation of the first ring gear 150 in response to rotation of the at least one pinion 155,156.

In this variation, the inner brush head 160 is affixed to the first ring gear 150 by means of a locking screw 161, with the first ring gear and inner brush head forming a bearing surface 162 for permitting counter-rotation relative to the second ring gear 159. In addition, the second ring gear is affixed to outer brush head 163 by, for example, location pins 164. As a result, the inner brush head 160 rotates with shaft 151 and outer brush head 163 rotates in an opposite direction relative to the shaft to obtain a counter-rotation effect for the respective inner bristles 165 and outer bristles 165'.

Attachment of the counter-rotating brush assembly to the motor unit is achieved by a sleeve 166 having latch arms 167 arranged to be inserted into and engage a central opening in a main housing 168 that contains the motor and gear trains required to drive shaft 151, thereby securing the brush assembly to the main housing as the shaft 151 is inserted or snapped into a bushing provided in the first ring gear 150.

In this design, sleeve 166 extends to form a cover for the brush head, with the cover portion 166' including openings for receiving locating splines 169 for orienting the brush head module thus formed with the main housing 168, resulting in a particularly convenient modular design which permits the brush head assembly to be easily removed for replacement or cleaning, as illustrated in Figure 2-2. Of course, the modular design illustrated in Figure 2-2 can be used with gear arrangements other than that shown in Figure 2-1, including the gear arrangement shown in Figure 2, as well as in other types of brushes employing the principles of the invention.

Although in the illustrated embodiment the angular velocities of the inner and outer bristle assemblies are opposite in direction, by changing the gear ratios of the respective gears, by adding gears, a differential speed between inner and outer brushes moving in the same or opposite direction can also be obtained to optimize the cleaning and balancing effects provided. It is believed that it is the relative motion of the brushes that provides the increased intensity of the cross-cleaning effect. Moreover, the cleaning and balancing effects can be further optimized for a particular application by varying the total contact areas of the inner and outer bristles or by axially offsetting the inner and outer differentially rotating members.

In a further variation of the structure shown in Figures 2 and 3 which again does not fall within the scopoe of the invention, as illustrated in Figure 4, the cleaning brush is in the form of a toothbrush 21 having an outer bristle assembly 22 which rotates in a first direction and an inner bristle assembly 23 which rotates in a second direction. Because the toothbrush 21 must be perpendicular to the drive shaft 24, a different gear arrangement is used. In this variation, a bevel drive gear 25 is connected to the drive shaft. The motor (not shown) and drive shaft 24 may be of an identical construction to conventional rotary toothbrushes, including appropriate bearing supports 26 in a housing 32. The bristle assemblies of the toothbrush are supported by concentric inner and outer support members 27 and 28, the outer support member 28 being connected directly to a second bevel gear 29 and the inner support member 27 being connected via a second shaft 30 to a third bevel gear 33 positioned such that both the second and third bevel gears 29 and 33 engage the drive bevel gear 25 and rotate in response thereto to drive the inner and outer bristle supporting members 27 and 28 in opposite directions.

As a result of this improved electric toothbrush structure which employs the principles of the first embodiment which does not fall within the scope of the invention, a more stable brush action, more intense cross cleaning, and a generally better cleaning effect relative to conventional electric toothbrush designs is achieved. In addition, it is anticipated that an even more effective cleaning effect can be achieved by periodically reversing the direction of shaft rotation, for example, by including a flip flop in the motor control circuit.

In a variation of the toothbrush design, as shown in Figure 5 which again does not fall within the scope of the invention, a third non-rotatable bristle assembly or ring 35 depending from a housing 38 is added to the first and second bristle assemblies 36 and 37 of an electric toothbrush 34. Those skilled in the art will recognize that this structure is still in accordance with the general concept described in connection with Figure 1, except that for this example, n=3, V₁=+ve, V₂=-ve, and V₃=0. The stationary outer ring has the advantage of providing a more gentle massaging effect for the gums and to reduce splashing from the inner bristles.

In another variation of the toothbrush design shown in Figure 5, the bevel gear arrangement of Figure 5 is replaced by a drive gear 170 connected to shaft 171 and rotatable therewith, as shown in Figures 5-1 and 5-3, drive gear 170 in turn engaging a first ring gear 172 and a second gear 173, which as a result are driven by gear 170 to rotate in opposite directions. In this embodiment which again does not fall within the scope of the invention, first ring gear 172 is connected by means of, for example, a snap fitting 172A to an inner brush assembly 174 which thereby rotates in the direction of rotation of the first ring gear, and the second ring gear 173 is constructed to be integral with the outer brush assembly 175, thereby causing the bristles of the respective inner and outer brush assemblies to rotate in opposite directions to provide improved balance, counter-torque, and cross-cleaning effects. As in the first toothbrush embodiment, it will be appreciated by those skilled in the art that the toothbrush body 176 will include appropriate bearing surfaces for the various moving components, as well as means for assembling the body and shaft to a motor unit.

In yet another variation of the above-described toothbrush embodiments which does fall within the scope of the invention, two of each of elements 170-175 are provided, with the second set of elements 170-175 being indicated in Figures 5-2 and 5-4 by reference numerals 170'-175', to form a double head toothbrush. In this variation, power is transmitted from ring gears 172 and 173 to ring gears 172' and 173' by means of an intermediate drive gear 177. Those skilled in the art will appreciate that additional sets of counter-rotating heads could be added to the same drive train simply by adding addition intermediate gears corresponding to intermediate gear 177.

Figure 6 shows an application in which the bristles of the various brush designs are replaced by polishing or buffing discs to obtain a hand-held polisher 39 of the type used to polish automobiles. As discussed above, the problem of balancing forces is especially critical in a car polisher due to the problem of controlling the polisher when the polishing wheel is applied to corners of the automobile. The structure of the transmission mechanism for driving the two oppositely rotating polishing heads using via a common motor and drive shaft may be the same as shown in Figures 2 and 4, although variations of the above will undoubtedly occur to those skilled in the art. The illustrated car polisher includes a handle 40 in the housing 41, making it important to minimize the space taken up by the motor and transmission mechanism. Also shown is a power cord 42 for the motor. As illustrated, members 43 and 44 correspond respectively to bearing members 4 and 7 shown in Figure 2, with the bristle assemblies 23 and 22 shown in Figure 2 being replace by polishing wheels or discs 45 and 46.

Figure 7 shows a variation of the polisher illustrated in Figure 6, in which the basic structure of the first embodiment which does not fall within the scope of the invention is adapted for use as a floor polisher 51 having a pivotable handle 47, main housing 48, and respective counter-rotatable inner and outer polishing discs 49 and 50. Aside from the larger polishing heads and motor, details of this variation of the first embodiment can be identical to those of the variation shown in Figure 7.

Finally, Figures 8 and 9 show further applications of the principles of the first embodiment which does not fall within the scope of the invention. Figure 8 shows a hand-held battery operated shoe brush or polisher 52 having oppositely rotating bristle or polishing heads 53 and 54, and Figure 9 shows a hand-held battery operated massager 55 of the type including a plurality of massaging balls 56 mounted on oppositely rotating heads 57 and 58. The respective housing assemblies 62, 63, and 64 of the respective devices shown in Figures 9 and 10, including battery compartment covers 65 and 66, handle 67, and on-off switches or trigger controls 68 and 69 are conventional and therefore need not be further described herein.

Figure 10 illustrates a variation of the counter-rotation illustrated in Figures 1-9, in which two heads 103 and 104 are provided, while Figure 11 illustrates a variation of the mechanisms illustrated in Figures 1-9, in which dual shafts 105 and 106 are provided to drive the differentially rotating sections 107 and 108, the principles of the invention being applicable to numerous different shaft and gearing combinations.

Those skilled in the art will appreciate that the differential rotation principles of the invention can also be generalized to a variety of different head or tool configurations, and to appliances other than the ones illustrated herein. For example, Figure 11 illustrates a variation of the mechanisms illustrated in Figures 1-9, in which dual shafts 105 and 106 are provided to drive the differentially rotating sections 107 and 108, the principles of the invention being applicable to numerous different shaft and gearing combinations. Consequently, it is intended that the invention not be limited to the specific embodiments illustrated in the drawings and accompanying description set forth above, except as necessary in view of the prior art, and that the invention instead be limited solely by the appended claims.

## Claims

1. A household appliance of the type including a rotary head, wherein the head is divided into a plurality of coaxially rotatable members (174,175), at least two of said members being mutually differentially driven, **characterised in that** the appliance comprises at least two of said heads having laterally spaced axes, the said heads being driven in series and wherein each said head has two of said coaxially rotatable members (174,175) concentrically arranged to rotate in opposite directions, the inner one (174) of said two concentrically arranged members being affixed to a first ring gear (172), the outer one (175)of said two members being affixed to a second ring gear (173), and the two ring gears being driven by at least one pinion (170) in engagement with both ring gears.

2. A household appliance as claimed in claim 1, including an intermediate gear (177) for transmitting power from the first and second ring gears (172,173) of the first head to the first and second ring gears (172',173') of the second head.

3. A household appliance as claimed in claim 1 or 2, wherein each of said two concentrically arranged members (174,175) carries a plurality of bristles to form a counter-rotating brush.

4. A household appliance as claimed in claim 3, wherein said brush is a toothbrush.

## Patentansprüche

1. Haushaltsgerät des Typs mit einem Drehkopf, wobei der Kopf in eine Vielzahl von koaxial drehbaren Elementen (174, 175) unterteilt ist, wobei zumindest zwei der Elemente gegenseitig differentiell angetrieben sind, **dadurch gekennzeichnet, daß** das Gerät zumindest zwei der Köpfe aufweist, die lateral beabstandete Achsen haben, wobei die Köpfe in Reihe angetrieben werden und wobei jeder der Köpfe zwei der koaxial drehbaren Elemente (174, 175) aufweist, die konzentrisch angeordnet sind, um in entgegengesetzte Richtungen zu drehen, wobei der innere (174) der beiden konzentrisch angeordneten Elemente an ein erstes Zahnrad bzw. Hohlrad (172) angebracht ist, das äußere (175) der beiden Elemente an ein zweites Hohlrad (173) angebracht ist, und die beiden Hohlräder durch zumindest ein Ritzel (170) in Eingriff mit den beiden Hohlrädern angetrieben werden.

2. Haushaltsgerät nach Anspruch 1, mit einem Zwischenzahnrad (177) zum übertragen einer Leistung von dem ersten und dem zweiten Hohlrad (172, 173) des ersten Kopfes zu dem ersten und dem zweiten Hohlrad (172', 173') des zweiten Kopfes.

3. Haushaltsgerät nach Anspruch 1 oder 2, bei dem jedes der beiden konzentrisch angeordneten Elemente (174, 175) eine Vielzahl von Borsten trägt, um eine entgegendrehende Bürste zu bilden.

4. Haushaltsgerät nach Anspruch 3, bei der die Bürste eine Zahnbürste ist.

## Revendications

1. Appareil domestique du type comprenant une tète rotative, dans lequel la tête est divisée en une pluralité d'éléments pouvant tourner de manière coaxiale (174, 175), au moins deux desdits éléments étant entraînés ensemble de façon différentielle, **caractérisé en ce que** l'appareil comprend au moins deux desdites têtes ayant des axes espacés latéralement, lesdites têtes étant entraînées en série et dans lequel chacune desdites têtes a deux desdits éléments pouvant tourner de manière coaxiale (174, 175) disposés de manière concentrique pour tourner dans des sens opposés, l'élément intérieur (174) desdits deux éléments disposés de manière concentrique étant fixé à une première roue dentée (172), l'élément extérieur (175) desdits deux éléments étant fixé à une seconde roue dentée (173), et les deux roues dentées étant entraînées par au moins un pignon (170) en prise avec les deux roues dentées.

2. Appareil domestique selon la revendication 1, comprenant un engrenage intermédiaire (177) pour transmettre l'énergie en provenance des première et seconde roues dentées (172, 173) de la première tête aux première et seconde roues dentées (172', 173') de la seconde tête.

3. Appareil domestique selon la revendication 1 ou 2, dans lequel chacun desdits deux éléments disposés de manière concentrique (174, 175) porte une pluralité de poils pour former une brosse contrarotative.

4. Appareil domestique selon la revendication 3, dans lequel ladite brosse est une brosse à dents.
